# EUROPEAN PATENT SPECIFICATION

(11) **EP 2 082 974 B1**
(45) Date of publication and mention of the grant of the patent: **25.10.2017**
(21) Application number: 08170771.3
(22) Date of filing: 05.12.2008
(51) Int. Cl.: B65D 85/60, B29C 51/08, B29C 51/42, B29C 43/52, B29C 43/36

(54) **Cup-shaped container and method for confectionery products**
Becherförmiger Behälter und Verfahren für Süßwaren
Récipient en forme de tasse et procédé pour produits de confiserie

(30) Priority: 07.12.2007 IT TO20070887
(43) Date of publication of application: 29.07.2009
(73) Proprietor: SOREMARTEC S.A., 2632 Findel (LU); Ferrero S.p.A., 12051 Alba (Cuneo) (IT)
(72) Inventor: Terrasi, Giuseppe, 12050 Benevello (Cuneo) (IT)
(74) Representative: Rambelli, Paolo

(56) References cited:
- US-A- 2 744 288
- US-A- 2 811 815
- US-A- 2 886 927
- US-A- 4 048 780
- US-A1- 2005 213 209

## Description

The present invention relates to a cup-shaped container made from sheet material, of the type commonly used for containing and presenting confectionery products such as petits fours, chocolates, pralines and the like. Cup-shaped containers are known from US-A-2 886 927.

These containers, known as pleated cups, are generally formed from a single flat sheet of paper material, of circular shape for example, produced by cutting, which is shaped by deep drawing in a male-female mould to form a substantially flat base wall and a pleated or crimped lateral wall, with pleats extending from the base wall to the edge of the opening, which is consequently toothed.

After the deep drawing operation, a slight spring back of the paper forming the lateral wall gives the container its final flared and typically tapered shape. Although the tapered shape with a circular base is most commonly used, pleated cups having bases of different shapes, such as polygonal or oblong bases, and cups having walls which are only partly pleated, in other words walls in which flat portions alternate with pleated portions, are also known in the prior art, and are included in the scope of the present invention.

Because of the pleating, the lateral walls of pleated cups cannot withstand radial stresses, in other words stresses from the inside towards the outside of the cup-shaped container; these stresses cause the pleats to expand so that the sheet forming the container tends to return to its original flat state.

There are known pleated cups for cooking, which are generally produced from sheets of baking paper, and pleated cups for presentation, which are generally produced from sheets of greaseproof paper.

As mentioned above, the pleated cups to which the invention relates are generally produced by deep drawing; in order to increase output, it is usual to deep draw a plurality of superimposed flat sheets, in order to produce a stack of pleated cups, the maximum number of cups that can be produced in a single deep drawing operation being limited by the thickness of the sheet material that is used.

One object of the present invention is to provide a method for improving the output by increasing the number of pleated cups that can be produced in a single operation, while keeping the pleated cups of a single stack produced in this way within acceptable dimensional tolerance limits.

Another object of the invention is to provide a pleated cup which, owing to the characteristics of the sheet material used, can be given an attractive appearance, which is not generally the case when the commonly used paper sheet material is used.

The object of the invention are achieved by the cup-shaped container according to claim 1 and the method according to claim 5. Preferred embodiments are disclosed in the dependent claims.

The term "thermoforming" is used herein with the same meaning of "hot deep drawing".

In view of these objects, the invention proposes a cup-shaped container made from sheet material shaped by thermoforming, comprising a base and a lateral wall which is at least partially pleated, the container being characterized in that it is formed from a sheet or film of plastics material.

The invention also proposes a method and equipment for producing a cup-shaped container of the aforementioned type, having the features defined in the claims below.

Further features of the cup-shaped container according to the invention, and of the method and equipment for its production, will be made clear by the following detailed description, which refers to the attached drawings provided by way of non-limiting example, in which:
Figure 1 is a perspective view of a cup-shaped container of the type to which the invention relates;
Figure 2 is a schematic view, in front elevation, of equipment for producing a cup-shaped container according to the invention, and
Figure 3 is a perspective view of the equipment of Figure 2.

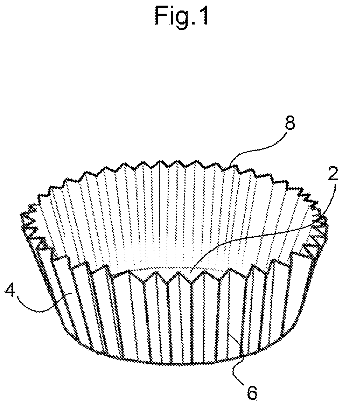

Figure 1 shows a cup-shaped container according to the invention, formed from a single sheet of sheet material which is shaped by thermoforming so as to form a substantially flat base wall 2 and a flared lateral wall 4, which has a pleated surface, having a plurality of grooves 6 which extend from the base wall to the edge of the opening 8 of the container. The
opening 8 thus has a toothed profile in plan view, the diameter of this profile varying according to degree of expansion of the pleats. As mentioned above, the cup-shaped container according to the invention is not to be considered as being limited to the conventional tapered shape shown in the drawing, but comprises containers having base walls with different shapes, such as polygonal or oblong, and containers in which the lateral wall has portions with a flat surface alternating with portions with a pleated surface.

The cup-shaped container according to the invention is essentially distinguished from conventional pleated cups of paper material in that it is formed from a sheet or film of plastics material which is made to be thermoformable. In particular, use is made of sheets or films of a polyolefin plastics material, particularly polypropylene and its copolymers, for example propylene-ethylene copolymers, the sheets or films preferably being monoaxially or biaxially oriented.

Sheets and films of these polymers are available on the market in a wide range of thicknesses. Surprisingly, it is possible to use rather thin films for the production of the cup-shaped container according to the invention, examples of such films preferably having thicknesses in the range from 10 to 50 µm (for example 20-30 µm, a range which is not claimed). These films are also available in a wide range of colour and surface finish, including, for example, films having a metallic surface appearance, with different colours on the two faces if required. These films are produced, for example, by applying a varnish to one or both of the faces. The use of films with a metallic surface appearance is particularly preferable for the purposes of the invention, since it makes it possible to produce cup-shaped containers whose appearance is similar to that of aluminium foil containers which are much more expensive.

The production process for a cup-shaped container of stable shape which can be used for containing and presenting confectionery products comprises the thermoforming of an initially flat sheet which is shaped to the desired profile, or preferably the simultaneous thermoforming of a plurality of such sheets which are superimposed and stacked, followed by a rapid cooling of the sheets which have been shaped to the cup configuration by thermoforming, within a time interval such that this configuration is stably retained. In particular, a first stage of the method includes the cutting of a strip of sheet or film of the plastics material which is used, to form discs which are then placed on top of each other to form a stack. As a general rule, the discs are circular, but, as stated above, the circular shape is not in any way essential; in other words, the term "disc" used in this description is not to be interpreted as meaning solely circular discs.

The stack of discs is then fed to the thermoforming device which comprises a male and a female element, having complementary shaping surfaces and forming a gap with complementary and at least partially grooved walls, to create the pleating of the walls of the cup-shaped container.

The thermoforming is carried out by heating the discs to a forming temperature and the heating is preferably provided by using a male and a female element with heated surfaces, for example surfaces heated by electrical resistance means.

Evidently, the heating temperature varies according to the nature of the plastics material used, and is generally between the temperature of thermal deflection under load and the softening temperature of the material; for example, the heating temperature may be in the range from 70°C to 130°C, or preferably, in the case of polypropylene, in the range from 80°C to 120°C.

The thermoforming process causes the deformation of the material.

The rapid cooling following the hermoforming stage has the effect of "freezing" the material in the configuration produced by thermoforming. Typically, the cooling temperature is of the order of 0-10°C, and the material is preferably cooled and maintained at the cooling temperature for a period of about 5-30 seconds, or preferably about 10-25 seconds.

The principle according to which the shape of certain plastics materials, including polyolefins used for the purposes of the invention, can be modified, generally on the basis of stretching and heating to an activation temperature, followed by stabilization in the new shape imparted to them by rapid cooling, is known, and is used to impart shape memory to proprietary materials of this type. The shape memory properties created in this way cause the material to return to its original shape when it is reheated to a point above the activation temperature. For the purposes of the invention, however, the possibility that the discs shaped into cups may return to their original flat configuration when heated to a point above the aforesaid activation temperature is not a disadvantage, since the conditions in which the cup-shaped containers are used to present confectionery products do not generally entail exposure to temperatures above the ambient temperature.

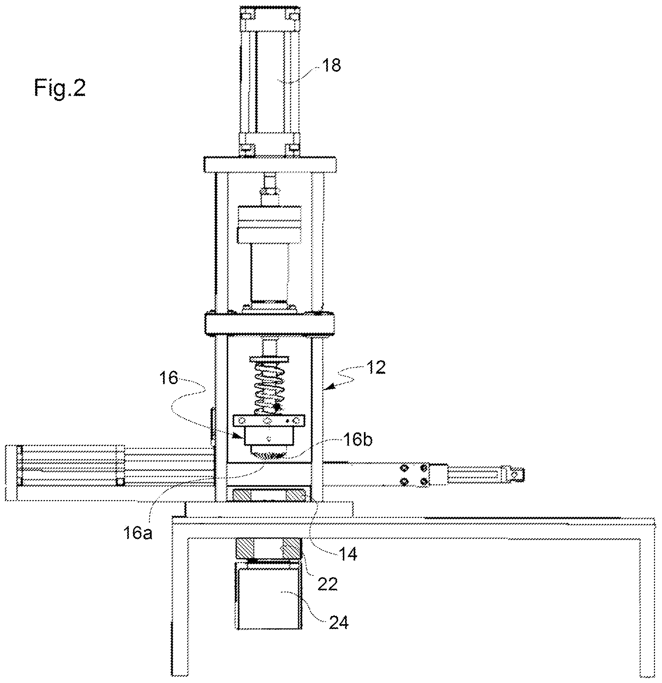

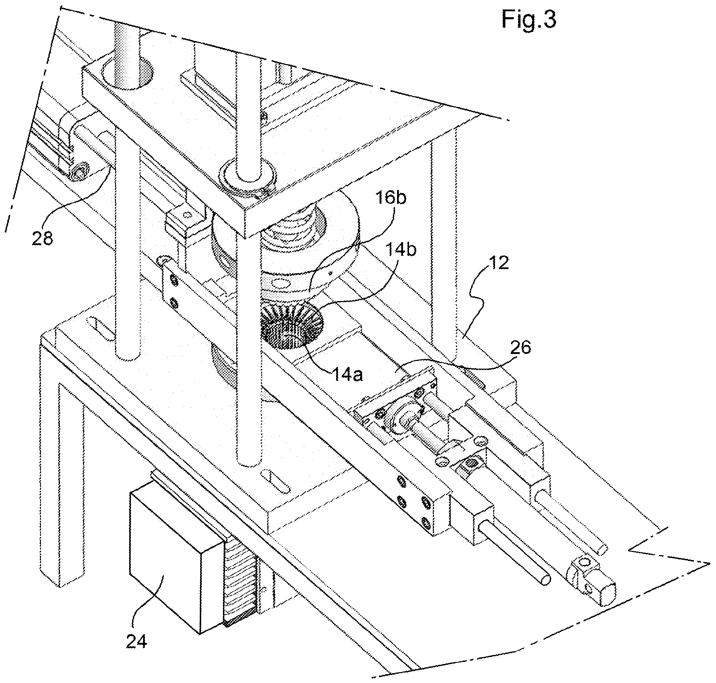

Figures 2 and 3 provide a schematic illustration of equipment for the use of the method.

This equipment comprises a support structure 12 associated with drawing means comprising a female thermoforming element 14, which is generally static, and a male thermoforming element 16, which is generally movable between a retracted disengaged position and an advanced position in which it engages the female thermoforming element, and motor means 18 which cause the male thermoforming element to move between said positions or which cause said thermoforming elements to move relative to each other.

The female thermoforming element 14 comprises a cylindrical cavity 14a, which is not necessarily in the form of a circular cylinder, with grooved walls for forming the pleating of the lateral wall of the cup-shaped container, and an annular surface 14b, which is generally flared and surrounds said cavity, and which is provided with radial projections 15.

The male thermoforming element 16 comprises an outer male thermoforming element with an annular ring 16b having a flared annular surface, with radial grooves, which is complementary to the annular surface 14b of the female thermoforming element, and an inner male thermoforming element in the form of a plug 16a with a grooved lateral wall, substantially complementary to the wall of the cylindrical cavity 14a, this plug being movable inside the ring-shaped outer male thermoforming element 16b. The inner male thermoforming element 16a is movable between a retracted position inside said outer male thermoforming element 16b and an outward position in which it penetrates into the cavity 14a.

Heating means, typically of the electric resistance type, are associated with the male and/or female thermoforming element. The equipment also comprises cooling means (22, 24) for receiving the cup-shaped container formed by the thermoforming element, and for rapidly cooling it. Said cooling means comprise a dropping tunnel (22) located under the thermoforming means and associated with cooling elements (24).

For example, the equipment comprises a cooling tunnel 22 which is associated with a cooling unit 24, of the Peltier cell type for example, located under the female thermoforming element, for cooling the tunnel to the desired cooling temperature. The equipment also comprises a feed unit 26 with motor means 28, designed to feed a stack of discs of sheet to a point where they rest on the female thermoforming element 14. In the thermoforming method, the stack of discs is positioned on the female thermoforming element 14 so that it rests on the annular surface 14b; the motor means 18 cause the male thermoforming element 16 to advance, with the annular surface of the outer male thermoforming element 16b bearing on the surface 14b on which the stack of discs is placed. Since the surfaces 14b and 16b are flared, the discs undergo initial forming in this stage. The motor means then cause the inner male thermoforming element 16a to advance so that it penetrates into the press cavity 14a, thus causing the deformation of the discs into the cup shape. The thermoforming time is typically of the order of a few seconds, for example in the range from two to five seconds. The motor means then cause the male drawing element to rise, enabling the stack of cup-shaped discs to advance into the cooling tunnel 22. Preferably, the transverse dimension of the tunnel is such that the walls of the shaped discs are in contact with the tunnel wall. Advantageously, the advance of the stack of cup-shaped discs into the cooling tunnel is caused by the thrust generated by a stack of discs which are subsequently and sequentially subjected to forming.

The cup-shaped containers produced in this way are then removed from the cooling tunnel after a resting time which, as stated above, is of the order of 10-25 seconds.

A considerable advantage of the method according to the invention is that a large number of discs of plastics material can be thermoformed simultaneously. In one specific not claimed embodiment, a biaxially oriented homopolymeric polypropylene film with a thickness of 30 µm was used with the equipment described above. 58.8 mm diameter discs to be thermoformed were formed from this film, and were placed in stacks of 28 discs each. To form cup-shaped containers with circular bases having a diameter of 32 mm, a stack of cup-shaped containers was thermoformed at a temperature of 93 °C (the temperature of the male and female press elements) with a thermoforming time of three seconds, the cooling time between the moment of entry into the cooling tunnel (length 100 mm) and exit from it being 20 seconds.

The cup-shaped containers produced in this way had a stable shape suitable for containing and presenting confectionery products such as pralines and the like. Clearly, the cup-shaped containers produced according to the invention are not self-supporting; in other words, they have lateral walls which cannot withstand radial stresses from the inside towards the outside; however, this is not a disadvantage, since it is a common feature of paper cup-shaped containers according to the prior art.

Clearly, provided that the principle of the invention is retained, the forms of application and the details of implementation can be varied widely from what has been described by way of example, without departure from the scope of protection which is defined by the appended claims.

## Claims

1. Cup-shaped container of sheet material, comprising a base (2) and a lateral wall (4) which is at least partially pleated (6), whereby it is formed by a sheet or film of polyolefin material having a thickness of from 10 to 50 µm which has been made thermoformable, by a method comprising thermoforming said sheet or film heated to a temperature between the temperature of thermal deflection under load and the softening temperature of the polyolefin material used, so as to impart the aforesaid cup-shaped configuration to the sheet or film, and
- rapidly cooling the sheet or film within a time interval such that the cup-shaped configuration is retained.

2. Cup-shaped container according to Claim 1, **characterized in that** said polyolefin material is homopolymeric polypropylene or an ethylene-propylene copolymer.

3. Cup-shaped container according to Claims 1 or 2, **characterized in that** said film of polyolefin material is monoaxially or biaxially oriented.

4. Cup-shaped container according to any one of the preceding claims, **characterized in that** it is formed from a film of polyolefin material having a metallic surface appearance.

5. Method for producing a cup-shaped container of sheet material according to Claim 1, **characterised in that** it comprises the operations of:
- providing said sheet or film of polyolefin material, having a thickness of from 10 to 50 µm,
- thermoforming said sheet or film heated to a temperature between the temperature of thermal deflection under load and the softening temperature of the polyolefin material used, so as to impart the aforesaid cup-shaped configuration to the sheet or film, and
- rapidly cooling the sheet or film within a time interval such that the cup-shaped configuration is retained.

6. Method according to Claim 5, **characterized in that** said sheet or film of polyolefin material is made from homopolymeric polypropylene or propylene-ethylene copolymer and the thermoforming is carried out at a temperature in the range from 70°C to 130°C.

7. Method according to Claim 6, **characterized in that** the thermoformed cup-shaped containers are cooled at a temperature in the range from 0°C to 10°C for a period in the range from 5 to 30 seconds.

8. Method according to any one of Claims 5 to 7, **characterized in that** the thermoforming is carried out on a plurality of stacked sheets.

9. Method according to any one of Claims 5 to 8, **characterized in that** the thermoformimg operation is carried out in combination with the stretching of the sheet or film material.

## Patentansprüche

1. Schalenförmiger Behälter aus Blattmaterial, umfassend eine Basis (2) und eine zumindest teilweise gefaltete (6) Seitenwand (4), wobei er durch ein Blatt oder eine Folie aus Polyolefinmaterial mit einer Dicke von 10 bis 50 µm gebildet wird, welches durch ein Verfahren thermoformbar gemacht worden ist, wobei das Verfahren umfasst: Thermoformen des Blatts oder der Folie, die auf eine Temperatur zwischen der Wärmeformbeständigkeitstemperatur unter Last und der Erweichungstemperatur des verwendeten Polyolefinmaterials erwärmt wurden, um dem Blatt oder der Folie die schalenförmige Konfiguration zu verleihen und schnelles Kühlen des Blatts oder der Folie innerhalb eines Zeitintervalls, so dass die schalenförmige Konfiguration beibehalten wird.

2. Schalenförmiger Behälter nach Anspruch 1, **dadurch gekennzeichnet, dass** das Polyolefinmaterial Polypropylen-Homopolymer oder ein Ethylen-Propylen-Copolymer ist.

3. Schalenförmiger Behälter nach Anspruch 1 oder 2, **dadurch gekennzeichnet, dass** die Folie aus Polyolefinmaterial monoaxial oder biaxial orientiert ist.

4. Schalenförmiger Behälter nach einem der vorangegangenen Ansprüche, **dadurch gekennzeichnet, dass** er aus einer Folie aus Polyolefinmaterial mit einem metallischen Oberflächenaussehen gebildet ist.

5. Verfahren zur Herstellung eines schalenförmigen Behälters aus Blattmaterial nach Anspruch 1, **dadurch gekennzeichnet, dass** es die Vorgänge umfasst:
- Bereitstellen einses Blatts oder einer Folie aus Polyolefinmaterial mit einer Dicke von 10 bis 50 µm,
- Thermoformen des Blatts oder der Folie, die auf eine Temperatur zwischen der Wärmeformbeständigkeitstemperatur unter Last und der Erweichungstemperatur des verwendeten Polyolefinmaterials erwärmt wurden, um die schalenförmige Konfiguration dem Blatt oder der Folie zu verleihen, und
- schnelles Abkühlen des Blatts oder der Folie innerhalb eines Zeitintervalls, so dass die schalenförmige Konfiguration beibehalten wird.

6. Verfahren nach Anspruch 5, **dadurch gekennzeichnet, dass** das Blatt oder die Folie aus Polyolefinmaterial aus Polypropylen-Homopolymer oder Propylen-Ethylen-Copolymer hergestellt ist und das Thermoformen bei einer Temperatur im Bereich von 70°C bis 130°C durchgeführt wird.

7. Verfahren nach Anspruch 6, **dadurch gekennzeichnet, dass** die thermogeformten schalenförmigen Behälter bei einer Temperatur im Bereich von 0°C bis 10°C für einen Zeitraum im Bereich von 5 bis 30 Sekunden gekühlt werden.

8. Verfahren nach einem der Ansprüche 5 bis 7, **dadurch gekennzeichnet, dass** das Thermoformen auf mehreren gestapelten Blättern durchgeführt wird.

9. Verfahren nach einem der Ansprüche 5 bis 8, **dadurch gekennzeichnet, dass** der Thermoformvorgang in Kombination mit dem Strecken des Blatt- oder Folienmaterials erfolgt.

## Revendications

1. Récipient en forme de tasse en matériau de feuille, comprenant une base (2) et une paroi latérale (4) qui est au moins partiellement plissée (6), moyennant quoi il est formé par une feuille ou un film de matériau de polyoléfine ayant une épaisseur de 10 à 50 µm qui a été rendu(e) thermoformable, par un procédé comprenant le thermoformage de ladite feuille ou dudit film chauffé(e) à une température entre la température de fléchissement thermique sous charge et la température de ramollissement du matériau de polyoléfine utilisé, de manière à communiquer la configuration en forme de tasse précitée à la feuille ou au film, et
- le refroidissement rapide de la feuille ou du film dans un intervalle de temps tel que la configuration en forme de tasse soit préservé.

2. Récipient en forme de tasse selon la revendication 1, **caractérisé en ce que** ledit matériau de polyoléfine est du polypropylène homopolymérique ou un copolymère éthylène-propylène.

3. Récipient en forme de tasse selon les revendications 1 ou 2, **caractérisé en ce que** ledit film de matériau de polyoléfine est monoaxialement ou biaxialement orienté.

4. Récipient en forme de tasse selon l'une quelconque des revendications précédentes, **caractérisé en ce qu'**il est formé d'un film de matériau de polyoléfine ayant un aspect de surface métallique.

5. Procédé de production d'un récipient en forme de tasse en matériau de feuille selon la revendication 1, **caractérisé en ce qu'**il comprend les opérations de :
- fourniture de ladite feuille ou dudit film de matériau de polyoléfine, ayant une épaisseur de 10 à 50 µm,
- thermoformage de ladite feuille ou dudit film chauffé(e) à une température entre la température de fléchissement thermique sous charge et la température de ramollissement du matériau de polyoléfine utilisé, de manière à communiquer la configuration en forme de tasse précitée à la feuille ou au film, et
- refroidissement rapide de la feuille ou du film dans un intervalle de temps tel que la configuration en forme de tasse soit préservée.

6. Procédé selon la revendication 5, **caractérisé en ce que** ladite feuille ou ledit film de matériau de polyoléfine est fabriqué en polypropylène homopolymérique ou en copolymère propylène-éthylène et le thermoformage est réalisé à une température dans la plage de 70 °C à 130 °C.

7. Procédé selon la revendication 6, **caractérisé en ce que** les récipients en forme de tasse thermoformés sont refroidis à une température dans la plage de 0 °C à 10 °C pendant une période dans la plage de 5 à 30 secondes.

8. Procédé selon l'une quelconque des revendications 5 à 7, **caractérisé en ce que** le thermoformage est réalisé sur une pluralité de feuilles empilées.

9. Procédé selon l'une quelconque des revendications 5 à 8, **caractérisé en ce que** l'opération de thermoformage est réalisée en combinaison avec l'étirage du matériau de feuille ou de film.
